(19) Europäisches Patentamt

European Patent Office

Office européen des brevets

(11) Publication number: **0 470 695 A2**

# EUROPEAN PATENT APPLICATION

(21) Application number: **91305780.8**

(22) Date of filing: **26.06.91**

(51) Int. Cl.⁵: **C03C 3/091**, C03C 14/00

(30) Priority: **12.07.90 GB 9015347**

(43) Date of publication of application:
**12.02.92 Bulletin 92/07**

(84) Designated Contracting States:
**DE FR GB IT**

(71) Applicant: **ROLLS-ROYCE plc**
**65 Buckingham Gate**
**London, SW1E 6AT(GB)**

(72) Inventor: **Clarke, David Andrew**
**30 Boulton Close**
**Burntwood, Staffordshire(GB)**
Inventor: **Dawson, David Malcolm**
**Westview, Hollybush Lane**
**Makeney, Milford(GB)**

Inventor: **Davies, Clara Margaret Asher**
**1st. Floor Flat, 53 Alma Road**
**Clifton, Bristol(GB)**
Inventor: **Lewis, Michael Harold**
**7A Rounds Hill**
**Kenilworth, Warwickshire(GB)**
Inventor: **Murthy, Varanasi Sri Rama Chandra**
**2/33 Pandaripuram Chilakaluripet**
**IN-522616 Guntur (DT), AP(IN)**
Inventor: **Pharaoh, Mark Wilson**
**51 Palmerstone Road**
**Earlsdon, Coventry(GB)**

(74) Representative: **Gunn, Michael Alan**
**P.O. Box 31, Moor Lane**
**Derby, DE2 8BJ(GB)**

(54) A glass composition, a method of manufacturing a glass composition and a method of manufacturing a fibre reinforced glass matrix composite.

(57) A novel alumina borosilicate glass comprises, by weight percent, 76.4-80,2% silica, 11,56-12,94% boron oxide, 3,725-6,96% sodium oxide and potassium oxide, 2,8-5,0% aluminium oxide, 0-0.30% calcium oxide, plus incidental impurities. This glass powder composition has to be held at temperatures of between 700°C and 1000°C for longer time periods, than the prior art alumina borosilicate glasses, before formation of the cristobalite polymorph of silica occurs.

A fibre reinforced glass matrix composite may be manufactured from the above glass powder by impregnating reinforcing fibres with the glass powder, and subsequently isothermally hot pressing the impregnated fibres at a temperature of 950°C for upto one hour. The glass matrix of the composite is less likely to suffer cracking or microcracking by the formation of the cristobalite polymorph of silica.

Other methods for producing a fibre reinforced glass matrix composite are disclosed.

Fig.1.

The present invention relates to a glass composition for fibre reinforced glass matrix composites, particularly for silicon carbide fibre reinforced glass matrix composites.

Low thermal expansion alumina borosilicate glasses are easily worked and have been used to make fibre reinforced glass matrix composites. These alumina borosilicate glasses, when melted or subsequently worked in the softening temperature range, easily retain the glassy state, i.e. there is little susceptibility to crystallisation.

Low thermal expansion alumina borosilicate glasses have low thermal expansion coefficients of the order of $3.3 \times 10^{-6}$ °C$^{-1}$, and this is similar to the thermal expansion coefficient of silicon carbide, which is $3.1 \times 10^{-6}$ °C$^{-1}$. The similarities in thermal expansion coefficients makes the combination of silicon carbide fibres in a low thermal expansion alumina borosilicate glass matrix very attractive.

However, when a low thermal expansion alumina borosilicate glass powder is heated to the 700°C to 1000°C temperature range, typically used in the manufacturing process for fibre reinforced glass matrix composites, crystallisation of the glass is difficult to avoid. Crystallisation is a major problem because the product crystal phase is the cristobalite polymorph of silicon dioxide which has a very high thermal expansion coefficient of $27 \times 10^{-6}$ °C$^{-1}$. This causes general matrix cracking or microcracking and also a modification to the interfacial shear resistance of the glass matrix composite, which leads to degradation of the mechanical properties of the composite.

One proposed solution to the problem is to increase the processing temperature for the manufacture of glass matrix composite, because as the temperature for complete melting of the silicon dioxide crystal phases, i.e. the liquidus, is approached the crystal nucleation rate falls to zero. A processing temperature greater than 1100 c has been found to produce an almost cristobalite free glass matrix after holding at that temperature for 30 minutes. However the increase in the processing temperature to more than 1000°C may cause the reinforcing fibres to be degraded and there is a lack of control in the development of the optimum mechanical properties for the composite.

The present invention seeks to provide a novel alumina borosilicate glass composition.

Accordingly the present invention provides an alumina borosilicate glass comprising, by weight percent, 76.4 to 80.2% silica, 11.56 to 12.94% boron oxide, 3.725 to 6.96% sodium oxide and potassium oxide, 2.8 to 5.0% aluminium oxide, 0 to 0.3% calcium oxide plus incidental impurities.

The alumina borosilicate glass may comprise by weight percent, 78.7 to 80.2% silica, 11.56 to 12.94% boron oxide, 3.725 to 6.96% sodium oxide and potassium oxide, 2.8 to 5.0% aluminium oxide, 0 to 0.3% calcium oxide plus incidental impurities.

The alumina borosilicate glass may comprise, by weight percent, 78.7 to 80.2% silica, 11.56 to 12.94% boron oxide, 3.725 to 6.96% sodium oxide and potassium oxide, 3.0 to 5.0% aluminium oxide, 0 to 0.3% calcium oxide plus incidental impurities.

The alumina borosilicate glass may comprise, by weight percent, 78.7 to 80.2% silica, 11.56 to 12.94% boron oxide, 3.725 to 6.96% sodium oxide and potassium oxide, 3.3 to 4.8% aluminium oxide, 0 to 0.3% calcium oxide plus incidental impurities.

The alumina borosilicate glass may comprise, by weight percent, 78.7 to 80.2% silica, 11.56 to 12.94% boron oxide, 3.725 to 6.96% sodium oxide and potassium oxide, 3.8 to 4.8% aluminium oxide, 0 to 0.3% calcium oxide, plus incidental impurities.

The alumina borosilicate glass preferably comprises by weight percent 78.7 to 79.9% silica, 11.94 to 12.14% boron oxide, 4.29 to 4.378% sodium oxide and potassium oxide, 3.3 to 4.8% aluminium oxide, 0 to 0.3% calcium oxide, plus incidental impurities.

A particular alumina borosilicate glass comprises, by weight percent, 79.3% silica, 12.07% boron oxide, 4.35% sodium oxide and potassium oxide, 3.8% aluminium oxide, 0.3% calcium oxide, plus incidental impurities.

The preferred alumina borosilicate glass comprises, by weight percent, 78.7% silica, 11.94% boron oxide, 4.29% sodium oxide and potassium oxide, 4.8% aluminium oxide, 0.28% calcium oxide, plus incidental impurities.

The present invention also provides a method of manufacturing an alumina borosilicate glass comprising the steps of

a) mixing an alumina borosilicate glass powder comprising, by weight percent, 78.0 to 80.6% silica, 11.8 to 13% boron oxide, 3.8 to 7.0% sodium oxide and potassium oxide, 2 to 2.8% aluminium oxide, 0 to 0.3% calcium oxide, plus incidental impurities with an additional by weight percent, 0.5 to 2% aluminium oxide powder,

b) melting the mixture at a temperature of 1450°C or above, c) quenching the molten mixture into demineralised water

d) crushing the quenched molten mixture,

e) milling the crushed quenched molten mixture to produce an alumina borosilicate glass powder.

The alumina borosilicate glass powder may comprise, by weight percent, 80.3 to 80.6% silica, 11.8 to 12.9% boron oxide, 4.2 to 4.6% sodium oxide and potassium oxide, 2 to 2.8% aluminium oxide, 0 to 0.3% calcium oxide, plus incidental impurities.

The alumina borosilicate glass powder may comprise, by weight percent, 80.3% silica, 12.2% boron oxide, 4.0% sodium oxide, 0.4% potassium oxide, 0.3% calcium oxide, 2.8% aluminium oxide plus incidental impurities.

The alumina borosilicate glass powder is preferably mixed with an additional, by weight percent, 1 to 2% aluminium oxide powder.

The present invention also provides a method of manufacturing a fibre reinforced glass matrix composite comprising the steps of

a) covering at least one suitable reinforcing fibre with an alumina borosilicate glass comprising, by weight percent, 76.4 to 80.2% silica, 11.56 to 12.94% boron oxide, 3.725 to 6.96% sodium oxide and potassium oxide, 2.8 to 5.0% aluminium oxide, 0 - 0.3% calcium oxide, plus incidental impurities,

b) hot pressing the fibres and alumina borosilicate glass.

The alumina borosilicate glass may comprise, by weight percent, 78.7 to 80.2% silica, 11.56 to 12.94% boron oxide, 3.725 to 6.96% sodium oxide and potassium oxide, 3.3 to 4.8% aluminium oxide, 0 to 0.3% calcium oxide, plus incidental impurities.

The hot pressing process may comprise heating the impregnated fibres to a temperature of between 700ºC and 1000ºC and isothermally holding at that temperature for upto 3 hours.

The alumina borosilicate glass powder may comprise, by weight percent, 79.3% silica, 12.07% boron oxide, 3.8% aluminium oxide, 4.35% sodium oxide and potassium oxide, 0.30% calcium oxide, plus incidental impurities, the hot pressing process comprises heating the impregnated fibres to 950ºC and isothermally holding at that temperature for upto 1 hour.

Alternatively the alumina borosilicate glass powder may comprise, by weight percent, 78.7% silica, 11.94% boron oxide, 4.8% aluminium oxide, 4.29% sodium oxide and potassium oxide, 0.28% calcium oxide, plus incidental impurities, the hot pressing process comprises heating the impregnated fibres to 950ºC and isothermally holding at that temperature for upto 3 hours.

The reinforcing fibres may be silicon carbide fibres.

The present invention will be more fully described by way of example with reference to the accompanying drawings, in which:-

Figure 1 is a graph of temperature versus log time illustrating crystal nucleation for silicon dioxide in a prior art glass composition and a glass composition according to the present invention.

Figure 2 is a graph of temperature versus log time illustrating a hot pressing process used to manufacture a fibre reinforced glass matrix composite using a glass composition according to the present invention.

Figure 3 is a graph of temperature versus log time illustrating crystal nucleation for silicon dioxide in the prior art glass composition in Figure 1 and a second glass composition according to the present invention.

Figure 4 is a graph of temperature versus log time illustrating a hot pressing process used to manufacture a fibre reinforced glass matrix composite using a second glass composition according to the present invention.

Prior art low thermal expansion alumina borosilicate glasses have been used to produce fibre reinforced glass matrix composites. A typical alumina borosilicate glass is Corning 7740 (produced by Corning Glass Works), sometimes referred to as a PYREX (Registered Trade Mark) glass. These glasses comprise, by weight percent, 78 to 80.6% silica, 11.8 to 13% boron oxide, 3.8 to 7.0% sodium oxide and potassium oxide, 2 to 2.8% aluminium oxide, 0 to 0.3% calcium oxide, plus incidental impurities. Corning 7740 comprises typically, by weight percent, 80.3% silica, 12.2% boron oxide, 4.4% sodium oxide and potassium oxide, 2.8% aluminium oxide and 0.3% calcium oxide. When the Corning 7740 glass composition is used to produce fibre reinforced glass matrix composites, the processing temperatures of 700º to 1000ºC and times required to produce the composite result in the glass matrix of the composite becoming cracked.

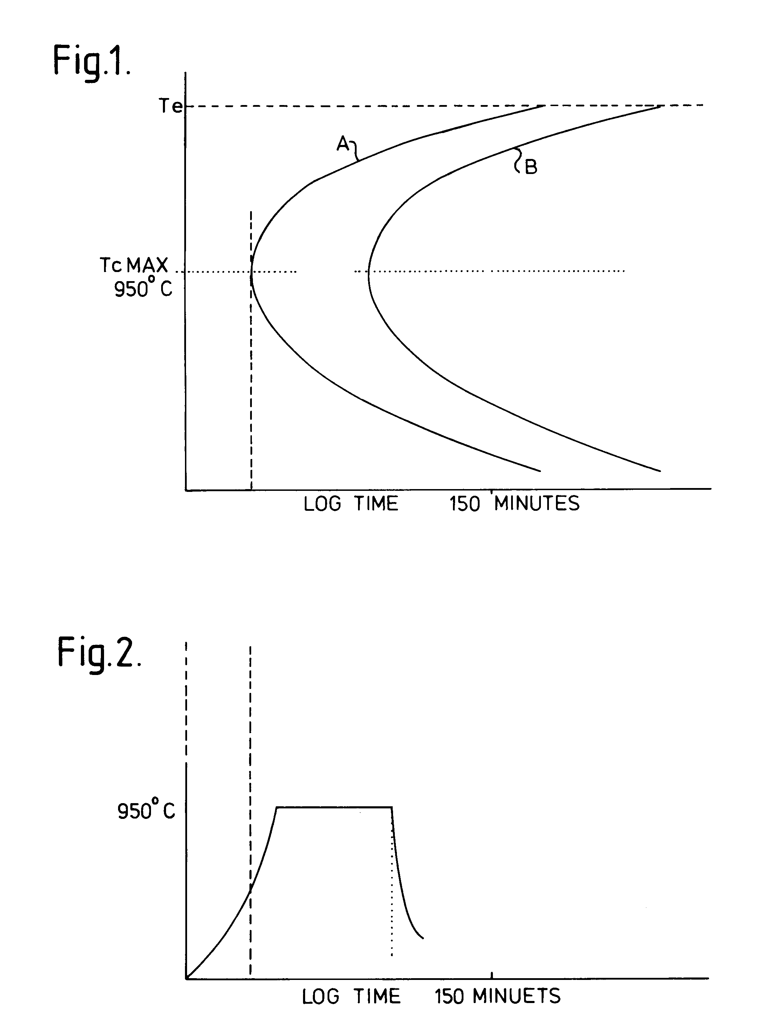

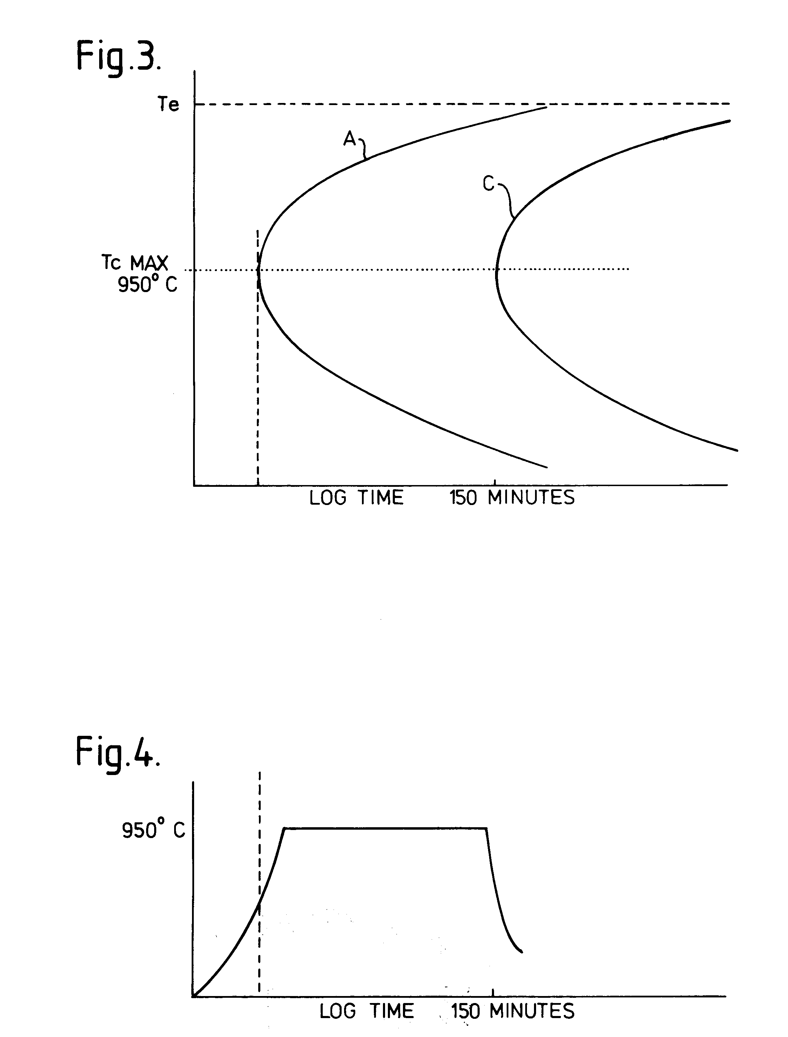

In Figures 1 and 3 line A illustrates the start of crystal nucleation of silica, with time and temperature, for the Corning 7740 glass composition. Crystal nucleation of the silica occurs most quickly at around 950ºC, but as the processing temperature is increased towards the temperature for complete melting of the silica crystal phase Te, i.e. the liquidus, the crystal nucleation rate falls to zero.

The use of an isothermal processing temperature greater than 1000ºC would reduce the amount of crystallisation of the silica in the glass matrix, however the reinforcing fibres may be degraded. Also there is a lack of control in the development of the ideal interface structure for optimum mechanical properties, such as shear and cohesive properties.

A low thermal expansion alumina borosilicate glass according to the present invention is suitable for producing a fibre reinforced glass matrix composite using a processing temperatures of 700º to 1000ºC and times in which the likelihood of cracking of the glass matrix of the composite is reduced or prevented.

Example 1

One low thermal expansion alumina borosilicate glass according to the present invention comprises, by weight percent, 79.3% silica, 12.07% boron oxide, 4.35% sodium oxide and potassium oxide, 3.80% aluminium oxide, 0.30% calcium oxide, plus incidental impurities. This has a composition by molecular percent, 82.42% silica, 10.72% boron oxide, 3.99% sodium oxide, 0.25% potassium oxide, 2.31% aluminium oxide and 0.31% calcium oxide.

Line B in figure 1 illustrates the start of crystal nucleation of silica, with time and temperature, for the glass composition in example 1. Crystal nucleation of the silica occurs again most quickly at around 950°C, and the crystal nucleation follows the same general trend as for the Corning 7740 glass composition. However the significant difference between the lines A and B is that the lower expansion alumina borosilicate glass according to the invention has to be subjected to the processing temperature for much longer time periods before crystal nucleation of the silica commences.

Example 2

A second low thermal expansion alumina borosilicate glass according to the present invention comprises, by weight percent, 78.7% silica, 11.94% boron oxide, 4.29% sodium oxide and potassium oxide, 4.8% aluminium oxide, 0.28% calcium oxide, plus incidental impurities. This has a composition by molecular percent, 81.90% silica, 10.67% boron oxide, 3.93% sodium oxide, 0.25% potassium oxide, 2.93% aluminium oxide and 0.31% calcium oxide.

Line C in Figure 3, illustrates the start of crystal nucleation of silica, with time and temperature, for the glass composition in example 2. Crystal nucleation of the silica occurs again most quickly at around 950°C, and the crystal nucleation follows the same general trend as for the Corning 7740 glass composition, and the glass composition of example 1. However the significant difference between the lines C and A is that the low expansion alumina borosilicate glass according to the invention has to be subjected to the processing temperature for much longer time periods before crystallisation of the silica commences. The glass composition of example 2 has to be subjected to the processing temperature for longer time periods than the glass composition of example 1 before crystallisation of the silica commences.

Example 3

A third low thermal expansion alumina borosilicate glass according to the present invention comprises, by weight percent, 79.9% silica, 12.14% boron oxide, 4.378% sodium oxide and potassium oxide, 3.3% aluminium oxide, 0.30% calcium oxide, plus incidental impurities. Crystal nucleation of the silica in this glass composition also occurs after longer time periods at the processing temperature than for the Corning 7740 glass composition, but after a shorter time period than for the glass compositions of examples 1 and 2.

The low thermal expansion alumina borosilicate glasses of examples 1,2 and 3 are produced by taking a powder glass having the Corning 7740 composition and adding an additional amount of aluminium oxide powder. A further 1%, by weight percent of aluminium oxide is added for the glass composition of example 1, a further 2%, by weight percent, of $Al_2O_3$ is added for the glass composition of example 2 and a further 0.5%, by weight percent of $Al_2O_3$ is added for the glass composition of example 3.

The aluminium oxide powder is dry mixed thoroughly with the Corning 7740 glass powder for about 48 hours. The resulting mixture is then processed at the conventional glass melting temperature of 1450°C using a zirconium stabilised platinum crucible to achieve dissolution and homogenisation. The resulting glass composition is quenched into demineralised water, and is then crushed. The crushed glass is then ball milled for 24 hours using aluminium oxide balls and methanol to produce a glass powder. The glass powder is sieved and finally dried.

The alumina borosilicate glass compositions in examples 1,2 and 3 are used to produce fibre reinforced glass matrix composites. A fibre reinforced glass matrix composite is produced by passing one or more suitable reinforcing fibres through a slip containing a desired one of the alumina borosilicate glasses of examples 1,2 or 3 suspended in a solution of an organic binder in a liquid carrier. This gives a mixture of a suitable reinforcing fibres impregnated with the alumina borosilicate glass.

The impregnated fibres are then wound on a drum to form a tape, and the resulting prepreg sheet is dried and then removed from the drum. The prepreg sheet is then cut to size and placed in a cavity between two dies. The dies are arranged to define the shape of a component to be produced, for example a compressor blade or turbine blade.

The prepreg sheet is then hot pressed between the two dies at a temperature in the range of 700°C to 1000°C. The temperature during the hot pressing process remains constant. The pressure is chosen to give the desired amount of consolidation and density to the finished component.

A prepreg sheet formed from suitable fibres and the alumina borosilicate glass composition of example 1 was heated to 950°C at a rate of 50°C min$^{-1}$, and was then hot pressed at 950°C for upto 1 hour, as shown in Figure 2, without the formation of the cristobalite in the glass matrix.

A prepreg sheet formed from suitable fibres and the alumina borosilicate glass composition of example 2 was heated to 950°C at a rate of 50°C min$^{-1}$, and was then hot pressed at 950°C for upto 3 hours, as shown in Figure 4, without substantial formation of the cristobalite in the glass matrix. Silica crystallisation is only just detectable after 3 hours at 950°C for the glass composition in example 2. Preferably the isothermal hold is for 1 to 2 hours.

The addition of a further 0.5% to 2% aluminium oxide, by weight percent, to the Corning 7740 glass composition shifts the silicon dioxide, cristobalite, nucleation time, to allow increased time for hot isothermal pressing of the prepreg sheet without substantial formation of cristobalite in the glass matrix of the composite. The influence of the added aluminium oxide is believed to reside principally in reduced silicon dioxide nucleation kinetics due to glass structure/viscosity changes. The addition of alumina is believed to decrease the ion mobility, slowing the diffusion rate of the elements so that the nucleation and growth of cristobalite is reduced. The growth of cristobalite in the prior art glass compositions changes the composition of the remaining glass to the sodium borate rich region, whereas the glass compositions of the present invention have little or no cristobalite growth and hence the glass composition remains constant. Additions of less than a further 0.5% alumina to the basic Corning 7740 glass composition does not prevent or reduce the crystal nucleation of the silica, and additions of more than a further 2% alumina to the basic Corning 7740 glass composition reduces the fluidity of the glass to unacceptable levels.

The time taken to heat the prepreg to the isothermal hot pressing temperature is no-longer critical but still has an influence on the maximum isothermal hold time for the hot pressing step. The increased time available for isothermal hot pressing enables a range of materials with tailored interface/property relationships by varying the isothermal hold time.

Suitable fibres include silicon carbide fibres, such as NICALON(Registered Trade Mark of Nippon Carbon Company) fibres or carbon fibres.

Other low thermal expansion alumina borosilicate glasses may be modified by addition of aluminium oxide. Another low thermal expansion alumina borosilicate glass comprises by weight percent 80.5% $SiO_2$, 11.8% $B_2O_3$, 4.4% $Na_2O$, 0.2% $K_2O$, 0.3% $CaO$, 2.0% $Al_2O_3$ plus balance impurities.

Another low thermal expansion alumina borosilicate glass comprises, by weight percent, 80.5% $SiO_2$, 12.9% $B_2O_3$, 3.8% $Na_2O$, 0.4% $K_2O$, 2.2% $Al_2O_3$ plus balance $CaO$ and impurities.

A further low thermal expansion alumina borosilicate glass comprises, by weight percent, 80.6% $SiO_2$, 11.9% $B_2O_3$, 3.8% $Na_2O$, 0.6% $K_2O$, 2.0% $Al_2O_3$, 0.2% $CaO$ plus balance impurities.

A further low thermal expansion borosilicate glass comprises, by weight percent, 78.1% $SiO_2$, 11.9% $B_2O_3$, 7.0% $K_2O$, 0.3% $CaO$, 2.7% $Al_2O_3$, plus balance incidental impurities.

The glass composition according to the present invention enables fibre reinforced glass matrix composites to be produced in which the cristobalite content of the glass matrix is less than 10 vol %. For fibre reinforced glass matrix composites with less than 10 vol % cristobalite content the properties of the glass composite are governed essentially by the fibre/matrix interface. In the prior art the properties of the glass composite are controlled primarily by the cristobalite content, a high content causes premature brittle failure in composites with strong fibre/matrix bonds, and matrix disintegration in composites with weak fibre/matrix bonds.

It may also be possible to manufacture a fibre reinforced glass matrix composite using chopped fibres which are impregnated with an alumina borosilicate glass according to the present invention.

A furthur alternative to manufacture a fibre reinforced glass matrix composite is to arrange layers of fibres alternately with layers of alumina borosilicate glass powder, such that each layer of fibres is interposed between two layers of the powdered glass. The fibres in each layer may be arranged parallel to each other. Alternatively the fibres in each layer may be woven into a fibre preform. The layers of fibres may be arranged such that the fibres in all the layers extend parallel to each other, or the fibres in the layers may be arranged such that the fibres extend at an angle e.g. perpendiculary. The layers of glass powder and fibres are arranged within a die and subsequently hot pressed to cause the glass to infiltrate between the fibres.

**Claims**

1. An alumina borosilicate glass comprising, by weight percent, 76.4 to 80.2% silica, 11.56 to 12.94% boron oxide, 3.725 to 6.96% sodium oxide and potassium oxide, 2.8 to 5.0% aluminium oxide, 0 to 0.3% calcium oxide plus incidental impurities.

2. An alumina borosilicate glass as claimed in claim 1 comprising by weight percent, 78.7 to 80.2% silica, 11.56 to 12.94% boron oxide, 3.725 to 6.96% sodium oxide and potassium oxide, 2.8 to 5.0% aluminium oxide, 0 to 0.3% calcium oxide plus incidental impurities.

3. An alumina borosilicate glass as claimed in claim 2 comprising, by weight percent, 78.7 to 80.2% silica, 11.56 to 12.94% boron oxide, 3.725 to 6.96% sodium oxide and potassium oxide, 3.0 to 5.0% aluminium oxide, 0 to 0.3% calcium oxide plus incidental impurities.

4. An alumina borosilicate glass as claimed in claim 3 comprising, by weight percent, 78.7 to 80.2% silica, 11.56 to 12.94% boron oxide, 3.725 to 6.96% sodium oxide and potassium oxide, 3.3 to 4.8% aluminium oxide, 0 to 0.3% calcium oxide plus incidental impurities.

5. An alumina borosilicate glass as claimed in claim 4 comprising, by weight percent, 78.7 to 80.2% silica, 11.56 to 12.94% boron oxide, 3.725 to 6.96% sodium oxide and potassium oxide, 3.8 to 4.8% aluminium oxide, 0 to 0.3% calcium oxide, plus incidental impurities.

6. An alumina borosilicate glass as claimed in claim 4 comprising, by weight percent, 78.7 to 79.9% silica, 11.94 to 12.14% boron oxide, 4.29 to 4.378% sodium oxide and potassium oxide, 3.3 to 4.8% aluminium oxide, 0 to 0.3% calcium oxide, plus incidental impurities.

7. An alumina borosilicate glass as claimed in claim 6 comprising, by weight percent, 79.3% silica, 12.07% boron oxide, 4.35% sodium oxide and potassium oxide, 3.8% aluminium oxide, 0.3% calcium oxide, plus incidental impurities.

8. An alumina borosilicate glass as claimed in claim 6 comprising, by weight percent, 78.7% silica, 11.94% boron oxide, 4.29% sodium oxide and potassium oxide, 4.8% aluminium oxide, 0.28% calcium oxide, plus incidental impurities.

9. A method of manufacturing an alumina borosilicate glass comprising the steps of
a) mixing an alumina borosilicate glass powder comprising, by weight percent, 78.0 to 80.6% silica, 11.8 to 13% boron oxide, 3.8 to 7.0% sodium oxide and potassium oxide, 2 to 2.8% aluminium oxide, 0 to 0.3% calcium oxide, plus incidental impurities with an additional by weight percent, 0.5 to 2% aluminium oxide powder,

b) melting the mixture at a temperature of 1450°C or above,
c) quenching the molten mixture into demineralised water
d) crushing the quenched molten mixture,
e) milling the crushed quenched molten mixture to produce an alumina borosilicate glass powder.

10. A method as claimed in claim 9 in which the alumina borosilicate glass powder comprises, by weight percent, 80.3 to 80.6% silica, 11.8 to 12.9% boron oxide, 4.2 to 4.6% sodium oxide and potassium oxide, 2 to 2.8% aluminium oxide, 0 to 0.3% calcium oxide, plus incidental impurities.

11. A method as claimed in claim 10 in which the alumina borosilicate glass powder comprises, by weight percent, 80.3% silica, 12.2% boron oxide, 4.0% sodium oxide, 0.4% potassium oxide, 0.3% calcium oxide, 2.8% aluminium oxide plus incidental impurities.

12. A method as claimed in claim 9 in which the alumina borosilicate glass powder is preferably mixed with an additional, by weight percent, 1 to 2% aluminium oxide powder.

13. A method of manufacturing a fibre reinforced glass matrix composite comprising the steps of
a) covering at least one suitable reinforcing fibre with an alumina borosilicate glass comprising, by weight percent, 76.4 to 80.2% silica, 11.56 to 12.94% boron oxide, 3.725 to 6.96% sodium oxide and potassium oxide, 2.8 to 5.0% aluminium oxide, 0 - 0.3% calcium oxide, plus incidental impurities,
b) hot pressing the fibres and alumina borosilicate glass.

14. A method as claimed in claim 13 in which the alumina borosilicate glass comprises, by weight percent, 78.7 to 80.2% silica, 11.56 to 12.94% boron oxide, 3.725 to 6.96% sodium oxide and potassium oxide, 3.3 to 4.8% aluminium oxide, 0 to 0.3% calcium oxide, plus incidental impurities.

15. A method as claimed in claim 13 in which the hot pressing process comprises heating the impregnated fibres to a temperature of between 700°C and 1000°C and isothermally holding at that temperature for upto 3 hours.

16. A method as claimed in claim 15 in which the alumina borosilicate glass powder comprises, by weight percent, 79.3% silica, 12.07% boron oxide, 3.8% aluminium oxide, 4.35% sodium oxide and potassium oxide, 0.3% calcium oxide, plus incidental impurities, the hot pressing process comprises heating the impregnated fibres to 950ºC and isothermally holding at that temperature for upto 1 hour.

17. A method as claimed in claim 15 in which the alumina borosilicate glass powder comprises, by weight percent, 78.7% silica, 11.94% boron oxide, 4.8% aluminium oxide, 4.29% sodium oxide and potassium oxide, 0.28% calcium oxide, plus incidental impurities the hot pressing process comprises heating the impregnated fibres to 950ºC and isothermally holding at that temperature for upto 3 hours.

18. A method as claimed in claim 13 in which the reinforcing fibres are silicon carbide fibres.

19. A method as claimed in claim 13 in which the fibre is covered with the alumina borosilicate glass by passing the fibre through powdered alumina borosilicate glass suspended in a solution of an organic binder in a liquid carrier to impregnate the fibre.

20. A method as claimed in claim 19 in which the impregnated fibre is wound onto a former.

21. A method as claimed in claim 13 in which at least one layer of fibres is interposed between layers of powdered alumina borosilicate glass.

# Fig.1.

Te

A

B

TcMAX
950°C

LOG TIME          150 MINUTES

# Fig.2.

950°C

LOG TIME      150 MINUETS

Fig.3.

Fig.4.